Europäisches Patentamt

European Patent Office

Office européen des brevets

(19)

(11) Veröffentlichungsnummer: **0 238 871 B1**

# (12) EUROPÄISCHE PATENTSCHRIFT

(45) Veröffentlichungstag der Patentschrift: **28.08.91**

(51) Int. Cl.5: **G01N 21/31**, G02F 1/03

(21) Anmeldenummer: **87102605.0**

(22) Anmeldetag: **24.02.87**

(54) **Messvorrichtung zur Analyse der Abgaszusammensetzung von Brennkraftmaschinen und Verfahren zum Betreiben einer solchen Vorrichtung.**

(30) Priorität: **12.03.86 DE 3608122**

(43) Veröffentlichungstag der Anmeldung:
**30.09.87 Patentblatt 87/40**

(45) Bekanntmachung des Hinweises auf die
Patenterteilung:
**28.08.91 Patentblatt 91/35**

(84) Benannte Vertragsstaaten:
**BE DE ES FR GB IT NL**

(56) Entgegenhaltungen:
**WO-A-80/00748**
**US-A- 4 207 469**

**PATENT ABSTRACTS OF JAPAN, Band 3, Nr. 28 (E-96), 9. März 1979, Seite 20 E 96; & JP-A-54 5778**

**PATENT ABSTRACTS OF JAPAN, Band 1, Nr. 66, 27. Juni 1977, Seite 462 E 77; & JP-A-52 5587**

(73) Patentinhaber: **PIERBURG GMBH
Alfred-Pierburg-Strasse 1
W-4040 Neuss 1(DE)**

(72) Erfinder: **Schneider, Gerd
Prämienstrasse 33
W-5144 Wegberg(DE)**
Erfinder: **Boost, Franz-Wilhelm
Vorster Strasse 37
W-4050 Mönchengladbach 6(DE)**
Erfinder: **Leimbach, Frank
Schevener Holz 29
W-4322 Sprockhövel 2(DE)**

## Beschreibung

Die Erfindung betrifft eine Meßvorrichtung zur Analyse der Abgaszusammensetzung von Brennkraftmaschinen, bestehend aus

1. einer Lichtquelle für von dem Abgas absorbierbares Licht,

2. einer von dem Licht durchstrahlten und von dem Abgas durchströmten Meßküvette,

3. einem im Strahlengang hinter der Meßküvette angeordneten Strahlungsdetektor zum Empfangen der absorptionsgeschwächten Lichtstrahlung und zum Erzeugen eines elektrischen Meßsignales,

4. einem Lichtunterbrecher zum periodischen Unterbrechen der Lichtstrahlung sowie

5. auf die zu messenden Gaskomponenten abgestimmte Strahlungsfilter sowie

ein Verfahren zum Betreiben einer solchen Vorrichtung.

Solche Meßvorrichtungen dienen also zur Konzentrationsanalyse von mindestens zwei Gaskomponenten und sind auf dem Markt unter anderem als $CO$-$CO_2$-Lambda-Tester erhältlich. Bei diesen bekannten Meßvorrichtungen fällt das gesammelte und gerichtete Licht eines IR-Strahlers unmittelbar durch eine von dem Meßgas querdurchströmte Meßküvette, in deren ausgangsseitigen Strahlengang ein sogenanntes Chopper-Rad und nachfolgend ein pyroelektrischer Detektor (Festkörperdetektor) mit Vorverstärker eingesetzt ist. Das Chopper-Red dreht sich mit sehr stabilem Gleichlauf mit einer Umdrehungsgeschwindigkeit von etwa 50 Hz; es weist rechteckzahnähnliche Randausnehmungen auf, welche den Lichtstrahlengang zwischen der Meßküvette und dem Detektor periodisch durchlassen, während die dazwischenliegenden Rechteckzähne den Lichtstrahlengang unterbrechen. In den Ausnehmungen sind Interferenzfilter eingesetzt, wobei benachbarte Interferenzfilter für verschiedene engbegrenzte Wellenlängenbereiche im IR-Bereich - entsprechend den Absorptionsbanden der jeweils hinsichtlich ihrer Konzentration zu messenden Gaskomponente - lichtdurchläßig sind.

Mit dieser bekannten Meßvorrichtung können also mit einer einzigen aus Lichtquelle, Meßküvette und Detektor bestehenden Meßanordnung mehrere Komponenten des die Meßküvette durchströmenden Gases gemessen werden. Die Nachteile dieser bekannten Meßvorrichtung bestehen unter anderem darin, daß die zu messenden Gaskomponenten zeitlich nacheinander erfaßt werden, ein vollständiger Meßzyklus etwa 0,17 Sekunden dauert und die gesamte Meßvorrichtung eine untrennbare, relativ große Baumaße aufweisende Einheit bildet. Eine solche Meßvorrichtung ist daher lediglich zur integralen Analyse der Abgaszusammensetzung von Brennkraftmaschinen geeignet.

Davon ausgehend liegt der Erfindung die Aufgabe zugrunde, eine gattungsgemäße Meßvorrichtung sowie ein Verfahren zum Betreiben einer solchen Meßvorrichtung zu schaffen, die eine exakte Analyse der Abgaszusammensetzung bei dynamischen Betriebszuständen von Brennkraftmaschinen, wie beim Gaswechsel, in jeder Phase des Verbrennungszyklus gewährleisten.

Die Aufgabe wird dadurch gelöst, daß

4.1. der Lichtunterbrecher unmittelbar hinter der Lichtquelle angeordnet ist und die zur Meßung verwendete Lichtstrahlung als Ganzes periodisch unterbricht,

6. für jede zu messende Gaskomponente eine eigene Meßküvette, ein eigener jeder Meßküvette zugeordneter Strahlungsfilter und ein eigener Strahlungsdetektor vorgesehen ist und alle Meßküvetten von dem Abgas gleichzeitig durchströmbar sind, und daß

7. zwischen dem Lichtunterbrecher und den Meßküvetten eine Lichtverteilvorrichtung zum gleichzeitigen Beaufschlagen aller Meßküvetten mit der Lichtstrahlung angeordnet ist.

Die Erfindung basiert also auf dem Grundgedanken, eine Meßvorrichtung zur gleichzeitigen Analyse mehrerer Gaskomponenten eines strömenden Gases mit den Merkmalen 1. bis 7. auszustatten, wodurch eine besonders exakte Konzentrationsbestimmung für mehrere Gaskomponenten eines sich schnell ändernden Gasgemisches möglich ist.

Durch die Erfindung werden unter anderem folgende Vorteile erzielt:

- Alle Gaskomponenten werden exakt gleichzeitig gemessen;
- es ist nur eine einzige Lichtquelle und ein einziger Lichtunterbrecher erforderlich;
- alle Meßküvetten werden von gleichphasig gepulstem Licht identischer Eigenschaftswerte durchstrahlt;
- durch die Strahlungsfilter bedingte Meßfehler sind minimiert, weil die - vor, bevorzugt aber im Strahlengang hinter, der Meßküvette angeordneten - Strahlungsfilter sich nicht bewegen sondern ortsfest positioniert sind;
- die Meßvorrichtung ist für die Messung der Abgaszusammensetzung unmittelbar hinter dem Verbrennungsraum von Brennkraftmaschinen, also zur Messung relativ heißer Gase geeignet, weil die Meßküvetten von dem sehr empfindlichen Lichtunterbrecher relativ weit entfernt angeordnet sein können, wodurch auch die Baumaße der Meßvorrichtung an die örtlichen Gegebenheiten besser als bisher anpaßbar sind; hierdurch können auch die Gaswege zu den Meßküvetten und mithin die Verzögerungszeiten zwischen Zusammensetzungsänderungen des Gasgemischs und der Erfassung dieser Zusammensetzungsänderung besonders kurz gehalten werden; deshalb kann die Meßvorrichtung auch für konzentrationsabhängige Regelungseingriffe bei schnellen Konszentrationsänderungen verwendet werden.

Bei einer praktischen Ausführungsform der Erfindung besteht die Lichtverteilvorrichtung aus einer Faseroptik, bei der das eine Ende eines Bündels lichtleitender Fasern mit der Lichtaustrittsseite des Lichtunterbrechers und das andere, in Teilbündel aufgeteilte Ende mit den Lichteintrittsseiten der Meßküvetten optisch gekoppelt sind. Hierdurch werden exakt gleiche Lichtwege zwischen dem Lichtunterbrecher und den Meßküvetten sowie eine gleichmäßige Intensitätsverteilung des Lichtes auf die Meßküvetten gewährleistet und eine flexible Anordnung möglich. Dabei kann zur gleichmäßigen Verteilung des Lichtes über die Querschnitte der Lichtbündel an den Kopplungsstellen eine Ein- bzw. Auskoppeloptik vorgesehen sein, durch die die Parallelität der Lichtstrahlen in den optisch zu koppelnden Elementen und eine vollständige und gleichmäßige Ausleuchtung der gekoppelten Querschnittsflächen gewährleistet ist; hierdurch werden also die lichtleitenden Querschnitte des Bündels der·lichtleitenden Fasern sowie der daraus gebildeten Teilbündel, aber auch die Lichteintrittsflächen der Meßküvetten vollständig und gleichmäßig genutzt bzw. ausgeleuchtet.

Gemäß einer bevorzugten Ausführungsform der Erfindung besteht der Lichtunterbrecher aus einer zwischen Polarisatoren angeordneten lichtdurchläßigen Zelle aus elektrooptisch aktivem (d.h. in einem elektrischen Feld optisch aktiven) Material mit diesem parallel oder quer zum Lichtstrahlengang angeordneten Elektroden zum Erzeugen eines elektrischen Wechselfeldes. Solche Lichtunterbrecher, z.B. in Form einer Kerrzelle, bevorzugt aber in Form einer Pockels-Zelle, gestatten in Verbindung mit einer entsprechenden Wechselspannungsquelle, insbesondere in Form einer Driver-Schaltung, den Lichtstrahlengang mit großer und gleichzeitig sehr stabiler Frequenz und mit vorgebbaren Flankensteilheiten zu unterbrechen und durchzulassen, die Wechselspannung kann z.B. in Form einer Ein/Aus-Schaltung der an den Elektroden anliegenden Spannung realisiert werden. Mit einem solchen Lichtunterbrecher können dynamische, hochfrequente Konzentrationsänderungen erstmals und mit hoher Genauigkeit gemessen werden.

Die Verwendung eines solchen Lichtunterbrechers in Verbindung mit einer gattungsgemäßen Meßvorrichtung hat sich auch für die Messung an Einzelküvetten, d.h. auch ohne die Verwendung einer Lichtverteilvorrichtung, als äußerst vorteilhaft erwiesen.

Eine erfindungsgemäße Meßvorrichtung wird derart betrieben, daß das von der Lichtquelle ausgehende Licht nacheinander durch den Lichtunterbrecher und die Lichtverteilvorrichtung, anschließend - parallel geschaltet - durch die Meßküvetten und diesen zugeordnete Strahlungsfilter geführt und schließlich von den Detektoren unter Bildung von Meßsignalen empfangen wird.

Zweckmäßige Ausgestaltungen des Erfindungsgegenstands, die insbesondere ein hohes Maß an Betriebssicherheit, Verwendungsflexibilität und Meßgenauigkeit gewährleisten, sind in weiteren Ansprüchen enthalten.

Die vorgenannten, erfindungsgemäß zu verwendenden Bauteile bzw. Verfahrensschritte unterliegen in ihrer Größe, Formgestaltung, Materialauswahl und technischen Konzeption, bzw. Verfahrensbedingungen keinen besonderen Ausnahmebedingungen, so daß die in den jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer erfindungsgemäßen Meßvorrichtung schematisch dargestellt ist.

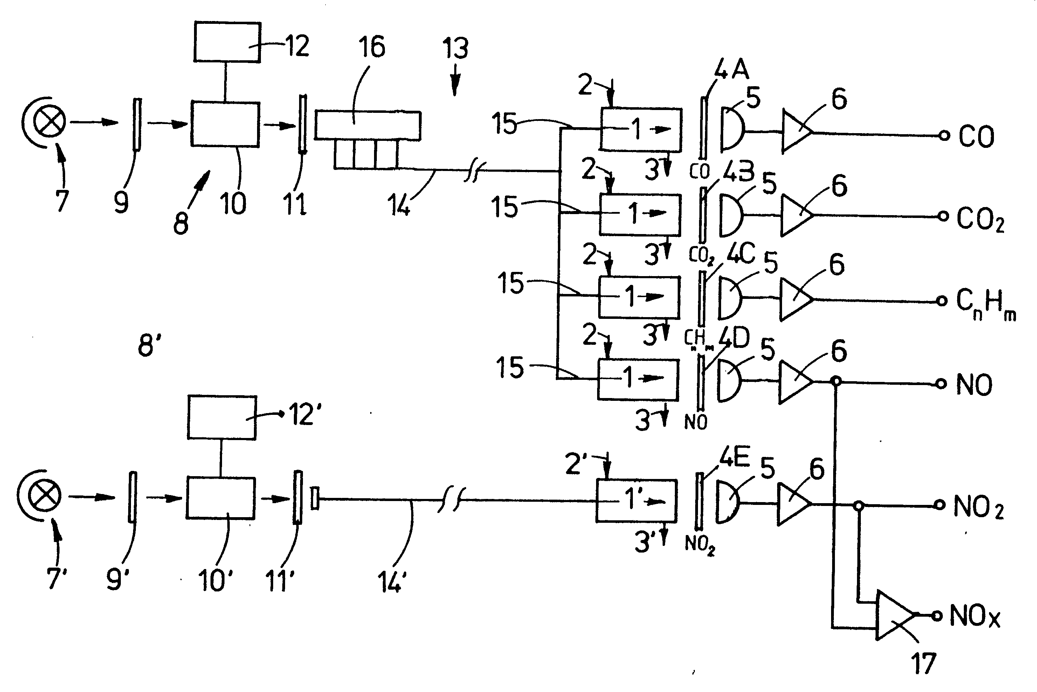

Für die Messung der Gaskomponenten CO, $CO_2$ $C_nH_m$, NO und $NO_2$ sind fünf Meßküvetten 1 gasströmungstechnisch parallel angeordnet, wobei die Gaswege für das zu analysierende Gasgemisch bis zu den Gaseintrittsstutzen 2 jeweils gleich lang sind und das Gasgemisch die Meßküvetten 1 über die Gasaustrittsstutzen 3 wieder verläßt. Im Strahlengang hinter den Meßküvetten 1, d.h. in der Zeichnung rechts von den Meßküvetten, sind Strahlungsfilter 4A bis 4E angeordnet, die in bekannter Weise als Bandpaßfilter ausgebildet sind und nur den für die Strahlungsadsorption der zu messenden Gaskomponente charakteristischen Wellenlängenbereich durch lassen; daß heißt im Beispiel für die Gaskomponenten CO, $CO_2$, $C_nH_m$, NO oder $NO_2$. Bevorzugt werden Interferenzfilter hierzu verwendet. Den Strahlungsfilter 4A bis 4E sind Strahlungsdetektoren 5 und diesen Verstärker 6 nachgeordnet. Als Strahlungsdetektoren werden bevorzugt keramische pyroelektrische Detektoren bekannter Bauart, z.B. aus Bleizirkoniumtitanat verwendet; sie liefern ein elektrisches Ausgangssignal, wenn sich der empfangene Strahlungsfluß ändert.

Für die in der Zeichnung obersten vier Meßküvetten ist nur eine einzige Lichtquelle 7, im Beispiel ein Infrarotstrahler, erforderlich. Das von der Lichtquelle 7 ausgehende Licht durchstrahlt zunächst einen Lichtunterbrecher 8, der aus einem Polarisator 9, einer Pockels-Zelle 10 und einem weiteren Polarisator 11 sowie einer Driver-Schaltung 12 besteht. Als Polarisatoren 9 und 11 können z.B. Nicol'sche Prismen verwendet werden. Die dargestellte Pockels-Zelle besteht in bekannter Weise aus einem elektrooptisch aktiven Material und quer zum Lichtstrahlengang angeordneten, von der Driver-Schaltung 12 mit hochfrequenter Wechselspannung beaufschlagten Elektroden. Die Frequenz der Wechselspannung kann sich nach dem speziellen Meßproblem und den Arbeitsfrequenzen der übrigen Komponenten richten. Sie wird bei der Verwendung pyroelektrischer Detektoren bei maximal 5 kHz liegen, weil dieses die Grenzfrequenz ist, die solche Detektoren auflösen können. Zur Auflösung periodisch sich ändernder Gaskonzentrationen empfehlen sich mindestens 10 Meßzyklen pro Periode, so daß bei einer Frequenz von 5 kHz eine differenzierte Abgasanalyse von Brennkraftmaschinen möglich ist, die mit einer Drehzahl bis 30.000 Umdrehungen pro Minute betrieben werden. - In der Pockels-Zelle 10 wird also - völlig trägheitslos - der Lichtstrahlengang mit hoher Frequenz und in ansich bekannter Weise unterbrochen und durchgelassen, wobei die Polarisatoren 9 und 11 alle unerwünschten Schwingungsrichtungen des Lichtes aus der Strahlungsquelle 7 ausblenden.

An den Polarisator 11 ist, gegebenenfalls unter Einfügung einer als Lichtverteilvorrichtung 13 ausgebildeten Faseroptik angekoppelt. Die Faseroptik besteht aus einem Bündel lichtleitender Fasern, wobei das Faserbündel 14 am Lichtaustrittsende in vier gleiche Teilbündel 15 unterteilt ist und die Teilbündel 15 mit den Lichteintrittsseiten der Meßküvetten 1, gegebenenfalls unter Zwischenfügung einer in der Zeichnung nicht dargestellten Auskoppeloptik, optisch gekoppelt sind. Bei dem Ausführungsbeispiel ist die Lichteintrittsseite des Faserbündels 14 mit einem sogenannten Lichtleitfaserverteiler 16 versehen.

Für die Messung der NO$_2$-Konzentration wird vorteilhafter Weise eine UV-Strahlung verwendet, da IR-Strahlung von NO$_2$ nur gering adsorbiert wird. Daher wird als Lichtquelle 7' ein UV-Strahler verwendet, während die übrigen optischen Bauteile (bis auf den Strahlungsfilter 4E) die gleichen wie für IR-Strahlung sein können. Bevorzugt werden die Meßwertausgänge für NO und NO$_2$ durch ein Addierglied 17 unter Bildung eines NO$_x$-Meßwertausganges zusammengelegt.

**Patentansprüche**

1. Meßvorrichtung zur Analyse der Abgaszusammensetzung von Brennkraftmaschinen, bestehend aus

   1. einer Lichtquelle (7) für von dem Abgas absorbierbares Licht,

   2. einer von dem Licht durchstrahlten und von dem Abgas durchströmten Meßküvette (1),

   3. einem im Strahlengang hinter der Meßküvette (1) angeordneten Strahlungsdetektor (5) zum Empfangen der absorptionsgeschwächten Lichtstrahlung und zum Erzeugen eines elektrischen Meßsignales,

   4. einem Lichtunterbrecher (8) zum periodischen Unterbrechen der Lichtstrahlung sowie

   5. auf die zu messenden Gaskomponenten abgestimmte Strahlungsfilter (4A bis 4D)

   **dadurch gekennzeichnet, daß**

   4.1 der Lichtunterbrecher (8) unmittelbar hinter der Lichtquelle (7) angeordnet ist und die zur Messung verwendete Lichtstrahlung als Ganze periodisch unterbricht,

   6. für jede zu messende Gaskomponente eine eigene Meßküvette (1), ein eigener, jeder Meßküvette (1) zugeordneter Strahlungsfilter (4A, 4B, 4C bzw. 4D) und je ein eigener Strahlungsdetektor (5) vorgesehen ist und alle Meßküvetten (1) von dem Abgas gleichzeitig durchströmbar sind, und daß

   7. zwischen dem Lichtunterbrecher (8) und den Meßküvetten (1) eine Lichtverteilvorrichtung (13) zum gleichzeitigen Beaufschlagen aller Meßküvetten (1) mit der Lichtstrahlung angeordnet ist.

2. Meßvorrichtung nach Anspruch 1, dadurch gekennzeichnet, daß die Lichtverteilvorrichtung (13) aus einer Faseroptik besteht, bei der das eine Ende eines Bündels lichtleitender Fasern mit der Lichtaustrittsseite des Lichtunterbrechers (8) und das andere, in Teilbündel (15) aufgeteilte Ende mit den Lichteintrittsseiten der Meßküvetten (1) optisch gekoppelt ist.

3. Meßvorrichtung nach Anspruch 2, gekennzeichnet durch eine Ein- und/oder Auskoppeloptik für die Faseroptik.

4. Meßvorrichtung nach Anspruch 2 oder 3, gekennzeichnet durch einen Lichtleitfaserverteiler (16).

5. Meßvorrichtung nach einem der Ansprüche 1 bis 4, dadurch gekennzeichnet, daß der Lichtunterbrecher (8) aus einer zwischen Polarisatoren (9, 11) angeordneten lichtdurchlässigen Zelle (10) aus elektrooptisch aktivem Material mit diesem zugeordneten Elektroden zum Erzeugen eines elektrischen Wechselfeldes besteht.

6. Meßvorrichtung nach Anspruch 5, gekennzeichnet durch die Verwendung einer Pockels-Zelle (10).

7. Meßvorrichtung nach Anspruch 5 oder 6, gekennzeichnet durch die Verwendung einer Driver-Schaltung (12).

8. Meßvorrichtung nach einem der Ansprüche 1 bis 7, dadurch gekennzeichnet, daß die Strahlungsfilter (4A bis 4E) Interferenzfilter sind.

9. Meßvorrichtung nach einem der Ansprüche 1 bis 8, gekennzeichnet durch die Verwendung einer weiteren Lichtquelle (7'), der hintereinander folgend im Lichtstrahlengang ein Lichtunterbrecher (8'), eine Meßküvette (1'), ein Strahlungsfilter (4E) sowie ein Strahlungsdetektor (5') nachgeordnet sind, und eine Verbindung des zugehörigen Meßwertausganges mit einem oder mehreren der übrigen Meßwertausgänge unter Bildung eines zusätzlichen Meßwertausganges.

10. Verfahren zum Betreiben einer Meßvorrichtung nach einem der Ansprüche 1 bis 9, dadurch gekennzeichnet, daß das von der Lichtquelle ausgehende Licht nacheinander durch den Lichtunterbrecher und die Lichtverteilvorrichtung, anschließend, parallel geschaltet, durch die Meßküvetten und diesen zugeordneten Strahlungsfilter geführt und schließlich von den Detektoren unter Bildung von Meßsignalen empfangen wird.

## Claims

1. A test device for analysing the composition of exhaust gas from internal combustion engines and comprising
   1. a source (7) of light to be absorbed by the exhaust gas,
   2. a test cell (1) through which the light travels and the exhaust gas flows,
   3. a radiation detector (5) disposed in the path of rays behind the test cell (1) and for receiving the light radiation attenuated by absorption and for generating an electric test signal,
   4. a light interruptor (8) for periodically interrupting the light radiation and
   5. radiation filters (4A to 4D) adapted to the gas components under test,
   characterised in that
   4.1 the light interruptor (8) is disposed immediately behind the light source (7) and periodically interrupts the entire light radiation used for testing,
   6. a separate test cell (1), a separate radiation filter (4A, 4B, 4C, 4D) associated with each test cell 1, and a separate radiation detector (5) is provided for each gas component under test, and all the test cells (1) are adapted to be simultaneously flowed through by the exhaust gas, and
   7. a light divider (13) is disposed between the light interruptor (8) and the test cells (1) in order simultaneously to supply each test cell (1) with the light radiation.

2. A test device according to claim 1, characterised in that the light divider (13) comprises an optical fibre system in which one end of a bunch of optical fibres is optically coupled to the exit side of the light interruptor (8) and the other end, divided into component bunches (15), is optically coupled to the entry sides of the test cells (1).

3. A measuring device according to claim 2, characterised by a coupling-in and/or coupling-out optical system for the fibre optical system.

4. A test device according to claim 2 or 3, characterised by an optical fibre divider (16).

5. A test device according to any of claims 1 to 4, characterised in that the light interruptor (8) comprises a light-transmitting cell (10) disposed between polarisers (9, 11) and made of electro-optically active material and associated with electrodes for generating an electric a.c. field.

6. A test device according to claim 5, characterised by use of a Pockels cell (10).

7. A test device according to claim 5 or 6, characterised by use of a driver circuit (12).

8. A test device according to any of claims 1 to 7, characterised in that the radiation filters (4A to 4E) are interference filters.

9. A test device according to any of claims 1 to 8, characterised by use of an additional light source (7') followed in succession, in the path of rays, by a light interruptor (8'), a test cell (1'), a radiation filter (4E) and a radiation detector (5'), the associated measurement output being connected to one or more of the other measurement outputs to form an additional measurement output.

10. A method of operating a test device according to any of claims 1 to 9, characterised in that the light leaving the source is successively conveyed through the light interruptor and the light divider and then in parallel through the test cells and the associated radiation filters and is finally received by the detectors and forms test signals.

**Revendications**

1. Dispositif de mesure pour l'analyse des composants de gaz d'échappement de moteurs à combustion interne, constitué par :

   1- une source lumineuse (7) pour la lumière destinée à être absorbée par les gaz d'échappement,

   2- une cuvette de mesure (1) traversée par la lumière et par les gaz d'échappement,

   3- un détecteur de rayonnement (5) disposé en aval de la cuvette de mesure (1) sur le trajet des rayons pour recevoir le rayonnement lumineux affaibli par l'absorption et pour produire un signal de mesure électrique,

   4- un interrupteur de lumière (8) pour interrompre périodiquement le rayonnement lumineux ainsi que

   5- des filtres de rayonnement (4A à 4D) réglés sur les composants gazeux à mesurer,

   caractérisé en ce que

   4.1 l'interrupteur de lumière (8) est disposé immédiatement en aval de la source lumineuse (7) et interrompt périodiquement dans sa totalité le rayonnement lumineux utilisé pour la mesure,

   6. on prévoit pour chaque composant du gaz à mesurer une cuvette de mesure particulière (1), un filtre de rayonnement particulier (4A,4B,4C et/ou 4D) affecté à chaque cuvette de mesure (1) et respectivement un détecteur de rayonnement particulier (5), et toutes les cuvettes de mesure (1) peuvent être simultanément traversées par les gaz d'échappement, et en ce qu'

   7. on dispose entre l'interrupteur de lumière (8) et les cuvettes de mesure (1) un dispositif de répartition de la lumière (13) pour alimenter simultanément en rayonnement lumineux toutes les cuvettes de mesure (1).

2. Dispositif de mesure selon la revendication 1, caractérisé en ce que le dispositif de répartition de lumière (13) est constitué par une optique à fibres, dans laquelle l'une des extrémités d'un faisceau de fibres optiques est couplée optiquement avec le côté sortie de la lumière de l'interrupteur de lumière (8) et l'autre extrémité, divisée en faisceaux partiels (15), est couplée optiquement avec les côtés entrée de la lumière des cuvettes de mesure (1).

3. Dispositif de mesure selon la revendication 2, caractérisé par une optique de couplage et/ou de découplage pour les fibres optiques.

4. Dispositif de mesure selon la revendication 2 ou 3, caractérisé par un répartiteur à fibres optiques (16).

5. Dispositif de mesure selon l'une des revendications 1 à 4, caractérisé en ce que l'interrupteur de lumière (8) est constitué par une cellule (10) transparente disposée entre des polariseurs (9,11), cette cellule en matériau électrooptiquement actif étant munie d'électrodes associées à ce matériau pour produire un champ électrique alternatif.

6. Dispositif de mesure selon la revendication 5, caractérisé par l'utilisation d'une cellule de Pockel (10).

7. Dispositif de mesure selon la revendication 5 ou 6, caractérisé par l'utilisation d'un circuit pilote (12).

8. Dispositif de mesure selon l'une des revendications 1 à 7, caractérisé en ce que les filtres de rayonnement (4A à 4E) sont des filtres d'interférences.

9. Dispositif de mesure selon l'une des revendications 1 à 8, caractérisé par l'utilisation d'une autre source lumineuse (7'), en aval de laquelle sont disposés, à la suite dans le parcours des rayons, un interrupteur de lumière (8'), une cuvette de mesure (1'), un filtre de rayonnement (4E) ainsi qu'un détecteur de rayonnement (5'), et par la jonction de la sortie de valeur mesurée associée avec une, ou plusieurs, des autres sorties de valeur mesurée, en formant une sortie de valeur mesurée supplémentaire.

10. Procédé pour faire fonctionner un dispositif de mesure selon l'une des revendications 1 à 9, caractérisé en ce que la lumière sortant de la source lumineuse est guidée successivement à travers l'interrupteur de lumière et le dispositif répartiteur de lumière, et -à l'aide d'un branchement en parallèle-, à travers les cuvettes de mesure et les filtres de rayonnement associés à celles-ci, et que finalement elle est reçue par les détecteurs en produisant des signaux de mesure.

CO

CO₂

CₙHₘ

NO

NO₂

NOx

EP 0 238 871 B1